# EUROPÄISCHE PATENTSCHRIFT

(11) **EP 0 973 344 B1**
(45) Veröffentlichungstag und Bekanntmachung des Hinweises auf die Patenterteilung: **29.03.2006**
(21) Anmeldenummer: 99110726.9
(22) Anmeldetag: 04.06.1999
(51) Int. Cl.: H04Q 3/545

(54) **Verfahren zum automatischen Bereitstellen von Informationen über Leistungsmerkmale einer Kommunikationsendeinrichtung**
Method for the automatic provision of information about service features of a communication terminal
Procédé pour la mise à disposition automatique d'informations sur des indicateurs de service d'un terminal de communication

(30) Priorität: 11.07.1998 DE 19831168
(43) Veröffentlichungstag der Anmeldung: 19.01.2000
(73) Patentinhaber: Deutsche Telekom AG, 53113 Bonn (DE)
(72) Erfinder: Hertzel, Silvio, 53639 Königswinter (DE); Wagner, Robert, 53343 Wachtberg (DE); Perini, Roland, 53424 Remagen (DE)

(56) Entgegenhaltungen:
- EP-A- 0 643 541
- EP-A- 0 744 874
- US-A- 5 388 212

## Beschreibung

Die Erfindung betrifft ein Verfahren, mit welchem einer Platzkraft eines Call Centers Informationen über die Leistungsmerkmale und/oder der aktuell implementierte Software wenigstens einer an ein Kommunikationsnetz angeschalteteten Kommunikations-Endeinrichtung automatisch bereitgestellt werden.

Die Nachrichtentechnik und dabei insbesondere die Informations- und Telekommunikationstechnik sind in jüngster Zeit einem rasanten Wachstumsprozeß ausgesetzt. Schlagworte wie Multimedia, ISDN, multifunktionale Endgeräte prägen dabei immer mehr unseren Sprachgebrauch. Die zum Einsatz kommenden multifunktionalen Endgeräte werden in ihrer Funktionsweise und in ihrem schaltungstechnischen Aufbau immer komplexer, so daß die implementierte Software bzw. die technischen Hardware-Komponenten für den Benutzer kaum noch erkennbar sind. Um die Endgeräte aus der Ferne warten, reparieren oder darin aufgetretene Fehler beseitigen zu können, sind jedoch Angaben über die entsprechenden Hardware- und Software-Implementationen eines Endgerätes erforderlich. Eine Unterstützung aus der Ferne, bei der ein Benutzer gewöhnlich über eine sogenannte Hotline mit einer Person einer zentralen Rufstelle verbunden ist, die ihn fernmündlich zur Beseitigung von Fehlern unterstützt, ist daher zeitraubend, schwierig und somit teuer, wenn der Kunde nicht in der Lage ist, die Hardwarekomponenten und die inmplementierte Software dem helfenden Personal mitzuteilen.

Aus der EP 0 643 541 A2 ist ein Dienstesystem bekannt, welches einem Kunden über eine Telefonleitung personalisierte Informationen, wie zum Beispiel den Wetterbericht, übermittelt. Die personalisierten Informationen sind in dem Dienstesystem gespeichert. Um dem Kunden die gewünschten Informationen übermitteln zu können, wird während des Verbindungsaufbaus eine Kundenkennung zum Dienstesystem übertragen. Unter Ansprechen auf die Kundenkennung wählt das Dienstesystem das dazugehörende Informationsprofil aus und überträgt die Informationen zum Kunden. Dem Dokument sind weder Hinweise noch Anregungen zu entnehmen, technische Informationen eines Kommunikationsendgerätes, die dem Kunden nicht bekannt sein müssen, zu einem Call Center zu übertragen.

Der Erfindung liegt daher die Aufgabe zugrunde, ein Verfahren bereitzustellen, mit dem es möglich ist, die Informationen über die Leistungsmerkmale und/oder die aktuell implementierte Software einer Kommunikations-Endeinrichtung an eine zentrale Einrichtung zu übermitteln, ohne daß hierzu der Benutzer diese Informationen über sein Endgerät kennen muß.

Dieses technische Problem löst die Erfindung mit den Verfahrensschritten des Anspruchs 1.

Zunächst wird in jeder Kommunikations-Endeinrichtung eine indviduelle Kennung, die die Leistungsmerkmale der Kommunikations-Endeinrichtung und/oder die darin aktuell implementierte Software darstellt, gespeichert. Bei den Kommunikations-Endeinrichtungen kann es sich um gewöhnliche Fernsprechapparate, Faxgeräte, Personalcomputer mit digitaler oder analoger Schnittstelle handeln. In einer zentralen Einrichtung, die mehreren Kommunikations-Endeinrichtungen zugeordnet ist, werden die individuelle Kennung sowie die dazugehörenden Leistungsmekmale und/oder aktuelle implementierte Software für jede Kommunikations-Endeinrichtung gespeichert. Bei der zentralen Einrichtung kann es sich beispielsweise um eine Mikroprozessor-unterstützte Datenbank handeln. Die Kommunikations-Endeinrichtung überträgt nach Herstellung einer Verbindung zu der zentralen Einrichtung ihre gespeicherte individuelle Kennung dorthin.

Die zentrale Einrichtung ermittelt dann aus der empfangenen individuellen Kennung die zur entsprechenden Kommunikations-Endeinrichtung gehörenden Leistungsmerkmale und/oder aktuell implementierte Software und übermittelt die entsprechenden Informationen zu einer Platzkraft eines Call Centers, die diese Informationen für weitere Dienste verwenden kann.. Die Platzkraft kommuniziert dann mittels einer Endeinrichtung mit dem Benutzer über dessen Kommunikations-Endeinrichtung und/oder unmittelbar mit der Kommunikations-Endeinrichtung.

Unter dem Begriff Leistungsmerkmal sind hierbei beispielsweise der Gerätetyp, die Hardwarekomponenten oder der Programmierzustand der Kommunikations-Endeinrichtung zu verstehen. Unter den Begriff Dienst fallen beispielsweise Wartungs- und Reparaturdienste, die von einer zentralen Stelle aus dem Benutzer einer Kommunikations-Endeinrichtung zur Verfügung gestellt werden. Bei der zentralen Stelle kann es sich um einen Call-Center handeln, an dem eine Platzkraft über ein eigenes Terminal mit der Kommunikations-Endeinrichtung und/oder dem Benutzer in Verbindung steht.

Vorteilhafte Weiterbildungen sind den Unteransprüchen zu entnehmen.

Gemäß einer Weiterentwicklung wird in der Kommunikations-Endeinrichtung ferner eine Teilnehmerkennung gespeichert, die den Benutzernamen, dessen Adresse und/oder wenigstens eine Teilnehmeranschlußnummer enthält. In der zentralen Einrichtung ist für jede Kommunikations-Endeinrichtung neben der Teilnehmerkennung auch der dadurch repräsentierte Benutzername, dessen Adresse und/oder wenigstens eine Teilnehmeranschlußnummer gespeichert. Sowohl die individuelle Kennung als auch die Teilnehmerkennung werden von der Kommunikations-Endeinrichtung zur zentralen Einrichtung übertragen. Mittels der Teilnehmerkennung können die Kommunikations-Endeinrichtungen überwacht und bei einer unberechtigten Benutzung gesperrt werden.

Die Überwachung erfolgt dadurch, daß in der zentralen Einrichtung jede, der empfangenen Teilnehmerkennung zugeordnete Teilnehmeranschlußnummer mit der Nummer der Teilnehmeranschlußeinheit, an die die Kommunikations-Endeinrichtung angeschaltet ist, verglichen wird. Die Kommunikations-Endeinrichtung wird für weitere Kommunikationen gesperrt, wenn die verglichenen Nummern nicht übereinstimmen.

Um in gezielter Weise aus der Ferne auf die entsprechende Kommunikations-Endeirichtung zugreifen zu können, sendet diese einen oder mehrere Befehle zur zentralen Einrichtung. Ein solcher Befehl kann beispielsweise die Aktualisierung der in der Kommunikations-Endeinrichtung implementierten Software betreffen. Da die zentrale Einrichtung über die individuelle Kennung den aktuellen Softwarezustand der Kommunikations-Endeinrichtung kennt, ist sie in der Lage, die neueste Software-Version in die Kommunikations-Endeinrichtung zu laden. Weitere Befehle betreffen beispielsweise die Wartung, eine Reparatur, das Programmieren von Zielwahltasten, das Aktivieren und/oder Deaktivieren von Leistungsmerkmalen und dergleichen. Dank der aus der individuellen Kennung ermittelbaren Leistungsmerkmale und implementierten Software ist die zentrale Einrichtung in der Lage, allein oder in Zusammenwirkung mit einer zentralen Stelle die Befehle auszuführen.

Die Leistungsfähigkeit des Verfahrens kann dadurch noch verbessert werden, daß die Kommunikations-Endeinrichtung bei Auftreten eines Fehlers einen entsprechenden Fehlercode erzeugt und diesen zur zentralen Einrichtung überträgt. Die zentrale Einrichtung erkennt unter Ansprechen auf die individuelle Kennung und den empfangenen Fehlercode den Fehler in der Kommunikations-Endeinrichtung und behebt diesen selbst oder übermittelt die entsprechenden Informationen zu einer Person in einer zentralen Stelle, die den Fehler behebt.

Um im Falle eines digitalen Kommunikationsnetzes die Kapazität der Nutzkanäle nicht einzuschränken, werden die individuelle Kennung und die Teilnehmerkennung und ggfs. Befehle und Fehlercodes über den Steuerkanal des digitalen Kommunikationsnetzes zur zentralen Einrichtung übertragen.

Gemäß einer Weiterbildung kann die Platzkraft des Call Centers mittels der Endeinrichtung über einen Nutzkanal eines digitalen Kommunikationsnetzes mit dem Benutzer über dessen Kommunikations-Endeinrichtung und/oder über einen Steuerkanal unmittelbar mit der Kommunikations-Endeinrichtung kommunizieren.

Die in der Kommunikations-Endeinrichtung vorgenommenen Änderungen, das sind beispielsweise Aktivierung und/oder Deaktivierung von Leistungsmerkmalen, die Aktualisierung von Software und dergleichen, werden in der zentralen Einrichtung protokolliert. Auf diese Weise kann die zentrale Einrichtung aus einer empfangenen individuellen Kennung immer den aktuellen Leistungs- und Softwarezustand der zugehörigen Kommunikations-Endeinrichtung ermitteln und, wenn gewünscht, automatisch eine Verbindung zu der entsprechenden Kommunikations-Endeinrichtung aufbauen und die neue Softwareversion einschreiben.

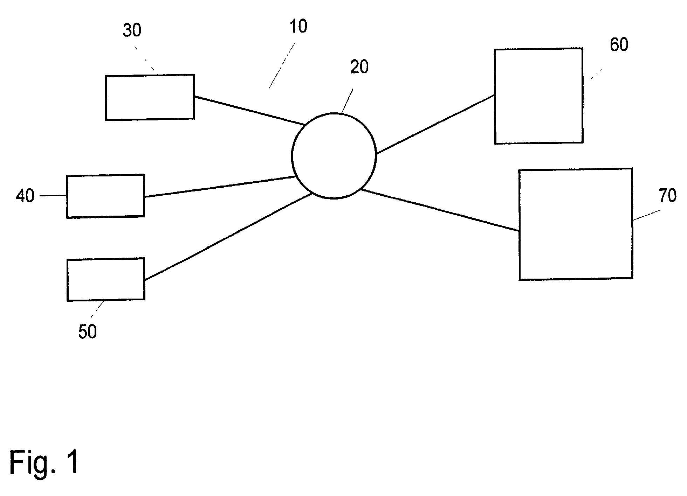

Die Erfindung wird nachfolgend anhand eines Ausführungsbeispieles in Verbindung mit der beiliegenden Figur näher erläutert.

Die Figur zeigt ausschnittsweise ein digitales Kommunikationsnetz 10 mit einer digitalen Vermittlungsstelle 20, an die über jeweils eine Teilnehmeranschlußleitung eine Kommunikations-Endeinrichtung 30, 40 bzw. 50 angeschaltet sind.

In unserem Beispiel stellt die Kommunikations-Endeinrichtung 30 ein ISDN-Telefon, die Kommunikations-Endeinrichtung 40 ein Telefaxgerät und die Kommunikations-Endeinrichtung 50 einen Personalcomputer dar. Der Vermittlungsstelle 20 ist eine zentrale Einrichtung 60 zugeordnet, die entweder direkt oder über einen Call-Center 70 mit den Kommunikations-Endeinrichtungen (30, 40, 50) verbunden sein kann. Auch wenn im vorliegenden Beispiel ein digitales Kommunikationsnetz beschrieben ist, kann selbstverständlich die Erfindung auch bei einem analogen Kommunikationsnetz verwendet werden, wenn hierzu die Kommunikations-Endeinrichtungen 40 und 50 über entsprechende Modems an das Netz angeschaltet sind. Obwohl im vorliegenden Beispiel die zentrale Einrichtung 60 und der Call-Center 70 an verschiedenen Orten installiert sind, ist es denkbar, die zentrale Einrichtung 60, die vorzugsweise eine Datenbank ist, im Call-Center 70 zu implementieren.

Die Betriebsweise des digitalen Kommunikationsnetzes 10 wird nunmehr näher erläutert. Jede Kommunikations-Endeinrichtung verfügt über einen nicht dargestellten Gerätespeicher, in den eine individuelle, Endeinrichtungs-spezifische Kennung abgelegt wird. In dem Gerätespeicher des ISDN-Telefones 30 ist eine individuelle Kennung abgelegt, die neben den Leistungsmerkmalen des Telefones 30 auch die implementierte Software enhält. Besondere Leistungsmerkmale des Telefones sind beispielsweise die Hardware (insbesondere der Microprozessortyp), aktivierbare und deaktivierbare Leistungsmerkmale, wie zum Beispiel Rufweiterleitung, Dreierkonferenz, Makeln und dergleichen. Darüber hinaus stellt die individuelle Kennung ebenfalls die aktuelle, in dem Telefon 30 gespeicherte Software dar. Auf ähnliche Weise ist in dem Telefaxgerät 40 eine individuelle Kennung gespeichert. Auch der Personalcomputer (50) enthält einen Speicher, in dem seine individuelle Kennung abgelegt ist.

Neben der individuellen Kennung sind in jeder Kommunikations-Endeinrichtung eine spezielle Teilnehmerkennung abgelegt.
Beispielsweise repräsentiert die im Speicher des Telefones 30 abgelegte Teilnehmerkennung den Namen des Benutzers, dessen Adresse und wenighstens die Nummer der Teilnehmeranschlußeinheit, an die das Telefon angeschaltet ist. Darüber hinaus können der Teilnehmerkennung weitere Teilnehmeranschlußnummern zugewiesen sein, an die das Telefon 30 angeschaltet werden darf. Auf ähnliche Weise ist in dem Telefaxgerät 40 und in dem Personalcomputer 50 eine entsprechende Teilnehmerkennung abgelegt. In der Datenbank 60 sind die individuelle Kennung und die Teilnehmerkennung jeder zugeordneten Kommunikations-Endeinrichtung, das heißt des Telefones 30, des Telefaxgerätes 40 und des Personalcomputers 50 abgelegt.

Es sei nunmehr das Szenario angenommen, daß das Display des ISDN-Telefons 30 defekt sei. Um den Fehler beheben zu können, leitet der Benutzer des Telefones 30 einen Verbindungsaufbau durch Betätigung einer vorbestimmten Taste oder Eingabe einer vorbestimmten Rufnummer zu dem Call-Center 70 her. Das Telefon 30 ist derart ausgebildet, das es gleichzeitig automatisch einen Verbindungsaufbau zur Datenbank 60 einleiten und die gespeicherte individuelle Kennung und Teilnehmerkennung zur Datenbank 60 übertragen kann. Das Telefon ist ferner in der Lage, spezielle Fehlercode zu erzeugen. Im vorliegenden Beispiel wird ein Fehlercode erzeugt, der auf einen Fehler in dem Display hinweist. Auch dieser Fehlercode wird zur Datenbank 60 übertragen, in der für jede Endeinrichtung 30, 40 und 50 eine entsprechende Fehlercode-Tabelle abgelegt sein kann. Beispielsweise erfolgt die Verbindung vom Telefon 30 zum Call-Center 70 über einen Nutzkanal (bei einem ISDN-Netz ist das der B-Kanal) und zur Datenbank 60 über den Steuerkanal (bei einem ISDN-Netz ist das der D-Kanal) des Kommunikationsnetzes. Hierzu muß die Adresse der Datenbank 60 im Telefon 30 gespeichert sein. Aufgrund der gespeicherten Information ist die Datenbank 60 in der Lage, unter Ansprechen auf die individuelle Kennung die Leistungsmerkmale und Software des Telefones 30 sowie aus der Teilnehmerkennung den Benutzernamen, dessen Adresse sowie die Teilnehmeranschlußnummer abzuleiten. Dies geschieht dadurch, daß die individuelle Kennung und die Teilnehmerkennung von der Datenbank 60 als Adresse interpretiert werden, unter der die jeweiligen Leistungsmerkmale, Softwareversionen und Teilnehmerinformationen abgelegt sind.

Die Datenbank 60 ließt nunmehr die zu der empfangenen individuellen Kennung, der Teilnehmerkennung und dem Fehlercode gehörenden Informationen aus und übersendet diese zum Call-Center 70. Diese Informationen werden der Platzkraft an dessen Arbeitsplatz beispielsweise über eine Anzeigeeinrichtung zur Verfügung gestellt. Ohne daß der Benutzer der Platzkraft zuvor die genauen Geräteangaben und Software-Versionen mitteilen muß, ist die Platzkraft sofort in der Lage, die wichtigsten Daten über das Telefon 30 zu erkennen. Aus der übermittelten Fehlermeldung ist nunmehr die Platzkraft in der Lage, entweder entsprechende Anweisungen zur Fehlerbehebung an den Benutzer zu übermitteln oder über ein eigenes Terminal direkt aus der Ferne auf das Telefon 30 zuzugreifen, um den Fehler zu beheben.

Gemäß einem weiteren Szenario ist es denkbar, daß die Datenbank 60 allein oder in Zusammenwirkung mit dem Call-Center eine Verbindung zu dem Personalcomputer 50 aufbaut, indem sie aus den für den Personalcomputer gespeicherten Informationen die Teilnehmeranschlußnummer heraussucht und anschließend eine Verbindung automatisch zum Personalcomputer 50 herstellt. Die Datenbank 60 fordert danach den Personalcomputer 50 auf, beispielsweise seine individuelle Kennung zu übermitteln, aus der die Datenbank 60 beispielsweise die aktuell implementierte Software erkennen kann. Stellt die Datenbank 60 fest, daß die in dem Personalcomputer 50 gespeicherte Software, beispielsweise eine Kommunikations-Software, nicht mehr aktuell ist, wird automatisch die aktuelle Software in den Personalcomputer 50 geladen. Gleichzeitig wird diese Änderung in der Datenbank 60 protokolliert, indem die neu installierte Software-Version unter der individuellen Kennung des Personalcomputers (50) eingetragen wird.

Mit Hilfe der in den jeweiligen Kommunikations-Endeinrichtungen 30, 40 und 50 abgelegten Teilnehmerkennung, die unter anderem die Teilnehmeranschlußnummern enthält, über die die jeweilige Kommunikations-Endeinrichtung kommunizieren darf, kann die Datenbank 60 allein oder in Verbindung mit dem Call-Center 70 eine Überwachung der jeweiligen Kommunikations-Endeinrichtungen vornehmen. Beispielsweise können gestohlene Kommunikations-Endeinrichtungen dadurch festgestellt werden, daß das Telefon 30 an einem Teilnehmeranschluß eine Verbindung aufbauen will, zu dem sie jedoch keine Zugangsberechtigung hat. Die Überwachungsprozedur erfolgt dadurch, daß das Telefon nach Herstellung der Verbindung automatisch neben seiner individuellen Kennung auch die Teilnehmerkennung zur Datenbank 60 überträgt. Die Datenbank 60 vergleicht danach die unter der übertragenen Teilnehmerkennung abgelegten Teilnehmeranschlußnummern mit der Nummer des Teilnehmeranschlusses, an den das Telefon augenblicklich angeschlossen ist. Die augenblicklich verwendete Teilnehmeranschlußnummer erhält die Datenbank 60 von der Vermittlungsstelle 20. Stimmt die augenblickliche Teilnehmeranschlußnummer mit den unter der Teilnehmerkennung abgelegten Teilnehmeranschlußnummern nicht überein, wird das Telefon 30 entweder von der Datenbank 60 oder dem Call-Center 70 aus für weitere Kommunikationen gesperrt, indem die bestehende Verbindung einfach ausgelöst wird. Darüber hinaus ist es denkbar, daß die Datenbank 60 oder der Call-Center 70 automatisch eine Zentrale, beispielsweis eine Polizeizentrale anwählt und dieser mitteilt, daß an der ermittelten Teilnehmeranschlußeinheit eine nichtzugangsberechtigte Endeinrichtung angeschaltet ist.
Obwohl das Verfahren bezüglich eines digitalen Kommunikationsnetzes und für zahlreiche Dienste beschrieben worden ist, ist offensichtlich, daß das Verfahren ebenfalls in analogen Kommunikationsnetzen und für beliebige, nicht erwähnte Dienste angewendet werden kann.

## Patentansprüche

1. Verfahren zum automatischen Bereitstellen von Informationen über Leistungsmerkmale und/oder der aktuell implementierten Software wenigstens einer an ein Kommunikationsnetz angeschalteten Kommunikations-Endeinrichtung (30, 40, 50) einer Platzkraft eines Call Centers (70), mit folgenden Verfahrensschritten:
a) in jeder Kommunikations-Endeinrichtung (30, 40, 50) wird eine individuelle Kennung, die die Leistungsmerkmale der Kommunikations-Endeinrichtung und/oder die darin aktuell implementierte Software darstellt, gespeichert;
b) in einer der Kommunikations-Endeinrichtung zugeordneten zentralen Einrichtung (60) werden die individuelle Kennung sowie die dazu gehörenden Leistungsmerkmale und/oder aktuell implementierte Software für jede der zentralen Einrichtung (60) zugeordneten Kommunikations-Endeinrichtung (30, 40, 50) gespeichert;
c) Herstellen einer Verbindung zwischen der Kommunikations-Endeinrichtung (30, 40, 50) und der zentralen Einrichtung (60);
d) die Kommunikations-Endeinrichtung (30, 40, 50) überträgt nach Herstellung der Verbindung ihre gespeicherte individuelle Kennung zur zentralen Einrichtung (60); und
e) die zentrale Einrichtung (60) ermittelt aus der empfangenen individuellen Kennung die zur entsprechenden Kommunikations-Endeinrichtung (30, 40, 50) gehörenden Leistungsmerkmale und/oder aktuell in dieser implementierte Software und übermittelt die entsprechenden Informationen zu einer Platzkraft eines Call Centers (70); und
f) die Platzkraft des Call Centers (70) kommuniziert mittels einer Endeinrichtung mit dem Benutzer über dessen Kommunikations-Endeinrichtung (30, 40, 50) und/oder unmittelbar mit der Kommunikations-Endeinrichtung.

2. Verfahren nach Anspruch 1, **dadurch gekennzeichnet, daß** in der Kommunikations-Endeinrichtung (30, 40, 50) eine Teilnehmerkennung und in der zentralen Einrichtung (60) der dazugehörende Benutzername, dessen Adresse und/oder wenigstens eine Teilnehmeranschlußnummer gespeichert wird, und daß in Schritt 1. d) auch die Teilnehmerkennung zur zentralen Einrichtung (60) übertragen wird.

3. Verfahren nach Anspruch 2,
**dadurch gekennzeichnet, daß**
a) in der zentralen Einrichtung (60) jede, der empfangenen Teilnehmerkennung zugeordnete Teilnehmeranschlußnummer mit der Nummer der Teilnehmeranschlußeinheit, an die die Kommunikations-Endeinrichtung angeschaltet ist, verglichen wird, und daß
b) die Kommunikations-Endeinrichtung (30, 40, 50) für weitere Kommunikationen gesperrt wird, wenn die der empfangenen Teilnehmerkennung zugeordnete Teilnehmeranschlußnummer nicht mit der zur Teilnehmeranschlußeinheit gehörenden Nummer übereinstimmt.

4. Verfahren nach einem der Ansprüche 1 bis 3, **dadurch gekennzeichnet, daß** ein oder mehrere Befehle zur Fernsteuerung der Kommunikations-Endeinrichtung (30, 40, 50) zur zentralen Einrichtung (60) übertragen werden.

5. Verfahren nach einem der Ansprüche 1 bis 4, **dadurch gekennzeichnet, daß** die Kommunikations-Endeinrichtung (30, 40, 50) bei einer Fehlfunktion einen entsprechenden Fehlercode erzeugt und diesen zur zentralen Einrichtung (60), in der eine Fehlercodetabelle abgelegt ist, überträgt, und daß die zentrale Einrichtung (60) unter Ansprechen auf die individuelle Kennung und den empfangenen Fehlercode den Fehler in der Kommunikations-Endeinrichtung (60) erkennt und eine entsprechende Fehlermeldung zur Platzkraft übermittelt.

6. Verfahren nach einem der Ansprüche 1 bis 5, **dadurch gekennzeichnet, daß** die in der Kommunikations-Endeinrichtung (30, 40, 50) gespeicherte individuelle Kennung und die Teilnehmerkennung über den Steuerkanal eines digitalen Kommunikationsnetzes zur zentralen Einrichtung (60) übertragen werden.

7. Verfahren nach Anspruch 1 oder 2, **dadurch gekennzeichnet, daß**
die Platzkraft über den Nutzkanal eines digitalen Kommunikationsnetzes mit dem Benutzer über dessen Kommunikations-Endeinrichtung (30, 40, 50) und/oder über den Steuerkanal des digitalen Kommunikationsnetzes unmittelbar mit der Kommunikations-Endeinrichtung kommuniziert.

8. Verfahren nach einem der Ansprüche 1 bis 7, **dadurch gekennzeichnet, daß** die in der Kommunikations-Endeinrichtung (30, 40, 50) vorgenommenen Änderungen in der zentralen Endeinrichtung (60) protokolliert werden.

## Claims

1. Method for automatic provision of information on performance parameters and/or the currently implemented software of at least one communications terminal device (30, 40, 50) to a representative of a call center (70), said terminal device being connected to a communications network, having the following process steps:
a) an individual identifier is stored in each communications terminal device (30, 40, 50), said identifier representing the performance parameters of the communications terminal device and/or the software currently implemented therein;
b) in a central unit (60) associated with the communications terminal device are stored the individual identifier and the associated performance parameters and/or the currently implemented software for each communications terminal device (30, 40, 50) associated with the central unit (60);
c) establishment of a connection between the communications terminal device (30, 40, 50) and the central unit (60);
d) after establishment of the connection, the communications terminal device (30, 40, 50) transmits its stored individual identifier to the central unit (60); and
e) from the received individual identifier, the central unit (60) determines the performance parameters belonging to the corresponding communications terminal device (30, 40, 50) and/or the software currently implemented in said communications terminal device, and transmits the corresponding information to a call center (70) representative; and
f) the call center (70) representative communicates with the user by means of a terminal device through said user's communications terminal device (30, 40, 50) and/or communicates directly with the communications terminal device.

2. Method according to claim 1, **characterized in that** a subscriber identifier is stored in the communications terminal device (30, 40, 50), and the associated user name, user address and/or at least one subscriber number are stored in the central unit (60), and **in that**
the subscriber identifier is also transmitted to the central unit (60) in step 1d).

3. Method according to claim 2, **characterized in that**
a) in the central unit (60), each subscriber number associated with the received subscriber identifier is compared to the number of the subscriber line unit to which the communications terminal device is connected, and **in that**
b) the communications terminal device (30, 40, 50) is blocked from further communications if the subscriber number associated with the received subscriber identifier does not match the number belonging to the subscriber line unit.

4. Method according to any one of claims 1 through 3, **characterized in that** one or more commands for remote control of the communications terminal device (30, 40, 50) are transmitted to the central unit (60).

5. Method according to any one of claims 1 through 4, **characterized in that,** in the event of a malfunction, the communications terminal device (30, 40, 50) generates an appropriate error code and transmits said error code to the central unit (60) where an error code table is stored, and **in that**
the central unit (60) identifies the malfunction in the communications terminal device (60) with the aid of the individual identifier and the received error code, and transmits an appropriate error message to the representative.

6. Method according to any one of claims 1 through 5, **characterized in that** the individual identifier stored in the communications terminal device (30, 40, 50) and the subscriber identifier are transmitted through the control channel of a digital communications network to the central unit (60).

7. Method according to claim 1 or claim 2, **characterized in that** the representative communicates with the user via the user's communications terminal device (30, 40, 50) through the data channel of a digital communications network and/or communicates directly with the communications terminal device through the control channel of the digital communications network.

8. Method according to any one of claims 1 through 7, **characterized in that** the changes made in the communications terminal device (30, 40, 50) are logged in the central unit (60).

## Revendications

1. Procédé de fourniture automatique d'informations sur les fonctionnalités et/ou le logiciel implémenté d'au moins un équipement terminal de communication (30, 40, 50), connecté à un réseau de communication, d'un opérateur d'un centre d'appels (70), comportant les démarches suivantes :
a) dans chaque équipement terminal de communication (30, 40, 50) est mémorisé un indicatif individuel permettant d'identifier les fonctionnalités de l'équipement terminal de communication et/ou le logiciel qui y est implémenté ;
b) dans une unité centrale (60) affectée à l'équipement terminal de communication, l'indicatif individuel ainsi que les fonctionnalités correspondantes et/ou le logiciel implémenté sont mémorisés pour chaque équipement terminal de communication (30, 40, 50) affecté à l'unité centrale (60) ;
c) établissement d'une connexion entre l'équipement terminal de communication (30, 40, 50) et l'unité centrale (60) ;
d) après établissement de la connexion, l'équipement terminal de communication (30, 40, 50) transmet son indicatif individuel mémorisé à l'unité centrale (60) ; et
e) l'unité centrale (60) identifie à partir de l'indicatif individuel reçu les fonctionnalités de l'équipement terminal de communication (30, 40, 50) et/ou le logiciel qui y est implémenté et transmet les informations correspondantes à un opérateur du centre d'appels (70) ; et
f) l'opérateur du centre d'appels (70) communique à l'aide d'un équipement terminal avec l'utilisateur via l'équipement terminal de communication (30, 40, 50) de celui-ci et/ou directement avec l'équipement terminal de communication.

2. Procédé selon la revendication 1, **caractérisé en ce qu'**un indicatif d'abonné est mémorisé dans l'équipement terminal de communication (30, 40, 50), le nom d'utilisateur correspondant, son adresse et/ou au moins un numéro de raccordement d'abonné étant mémorisés dans l'unité centrale (60), et **en ce que**, dans la démarche 1. d), l'indicatif d'abonné est également transmis à l'unité centrale (60).

3. Procédé selon la revendication 2, **caractérisé en ce que**
a) dans l'unité centrale (60), chaque numéro de raccordement d'abonné affecté à l'indicatif d'abonné reçu est comparé avec le numéro de l'unité de raccordement d'abonné sur laquelle est connecté l'équipement terminal de communication et **en ce que**
b) l'équipement terminal de communication (30, 40, 50) est bloqué pour d'autres communications si le numéro de raccordement d'abonné affecté à l'indicatif d'abonné reçu ne correspond pas au numéro de l'unité de raccordement d'abonné.

4. Procédé selon l'une des revendications 1 à 3, **caractérisé en ce qu'**une ou plusieurs commandes sont transmises à l'unité centrale (60) pour la télécommande de l'équipement terminal de communication (30, 40, 50).

5. Procédé selon l'une des revendications 1 à 4, **caractérisé en ce que** l'équipement terminal de communication (30, 40, 50) génère en cas de fonctionnement erroné un code d'erreur qu'il transmet à l'unité centrale (60), où un tableau des codes d'erreur est archivé, et **en ce que** l'unité centrale (60) identifie l'erreur dans l'équipement terminal de communication (30, 40, 50) à partir de l'indicatif individuel et du code d'erreur reçu et transmet un signalement d'erreur à l'opérateur.

6. Procédé selon l'une des revendications 1 à 5, **caractérisé en ce que** l'indicatif individuel mémorisé dans l'équipement terminal de communication (30, 40, 50) et l'indicatif d'abonné sont transmis à l'unité centrale (60) *via* le canal de commande d'un réseau de communication numérique.

7. Procédé selon l'une des revendications 1 ou 2, **caractérisé en ce que** l'opérateur communique avec l'utilisateur sur l'équipement terminal de communication (30, 40, 50) de celui-ci via le canal utile d'un réseau de communication numérique et/ou directement avec l'équipement terminal de communication via le canal de commande du réseau de communication numérique.

8. Procédé selon l'une des revendications 1 à 7, **caractérisé en ce que** les modifications apportées à l'équipement terminal de communication (30, 40, 50) sont consignées dans l'unité centrale.
